# EUROPEAN PATENT APPLICATION

(11) **EP 4 129 072 A1**
(43) Date of publication of application: **08.02.2023**
(21) Application number: 21779837.0
(22) Date of filing: 17.03.2021
(51) Int. Cl.: A23C 11/00, A23L 2/00, A23L 2/38

(54) **NUT MILK FOR FOAMING AND METHOD FOR PRODUCING SAME**

(30) Priority: 31.03.2020 JP 2020063208
(71) Applicant: Fuji Oil Holdings Inc., Izumisano-shi, Osaka 598-8540 (JP)
(72) Inventor: YANAGISAWA, Masanobu, Izumisano-shi, Osaka 598-8540 (JP)
(74) Representative: Boult Wade Tennant LLP
(86) International application number: PCT/JP2021/010845
(87) International publication number: WO 2021/200163

(57) **Abstract**

The present invention addresses the problem of providing a nut milk for foaming, which has excellent foaming properties and foaming stability and of which foam is hard to break even when a nut milk whipped by foaming with a steamer etc. is added to beverages such as coffee. A nut milk for foaming, which has excellent foaming properties and foaming stability, can be provided by using at least one modified starch selected from the group consisting of a phosphate cross linked starch, a phosphate monoesterified phosphate cross-linked starch, a starch acetate, an oxidized starch, a hydroxypropyl starch, a hydroxypropylated phosphate cross-linked starch, a sodium octenyl succinate starch, a phosphorylated starch, and a starch decomposition product.

## Description

### Technical Field

The present invention relates to a nut milk for foaming with better foaming property and foaming stability, and a method for producing the same.

### Background Art

The motion of taking in plant-based milk represented by soymilk as a substitute for milk is enlarged because of, for example, climate change represented by global warming; expansion of influence to buying interest by the generation after Millennials who have high environmental consciousness; consciousness of animal protection; and health problems such as the accumulation of cholesterol due to animal protein. However, there is a problem that a foam from plant-based milk tends to disappear when plant-based milk is foamed and put on coffee since the plant-based milk has inferior foaming stability than the milk.

As a method for imparting a foaming property to milk, various methods of adding an emulsifier or a stabilizer, for example, a method of adding various emulsifiers and foaming proteins to a foaming-type beverage (Patent Document 1), a method of adding an emulsifier having 14 or more HLB (Patent Document 2), and a method of adding casein, soy protein, microcrystalline cellulose, and carrageenan (Patent Document 3), have been disclosed.

As a technique for adding an emulsifier or a stabilizer to nut milk like a case in milk, a technique of adding high-acyl gellan gum, gum arabic and guar gum (Patent Document 4) has been disclosed. However, Patent Document 4 relates to an improvement of the mouthfeel. There is no prior art regarding the foaming property of nut milk.

Regarding as an improvement of foaming property in plant-based milk, a technique of adding sucrose fatty acid ester, glycerol fatty acid esters, or organic acid monoglycerin, which have 8 or more HLB, to soymilk (Patent Document 5) has been disclosed. However, Patent Document 5 is specific only to soymilk. There is no prior art regarding the foaming property of nut milk.

### Prior Art Documents

### Patent Documents

Patent Document 1: JP H10-295339 A
Patent Document 2: JP 2009-50259 A
Patent Document 3: JP S60-87775 A
Patent Document 4: JP 2019-512211 A
Patent Document 5: JP 2014-18124 A

### Summary of Invention

### Problems to be Solved by Invention

An object of the present invention is to provide a nut milk for foaming with better foaming property and foaming stability, for example, the foam is hard to break when the nut milk is foamed with steamer and the foamed nut milk is added to coffee or other beverages.

### Means for Solving Problems

The present inventor has intensively studied to solve the above problems. As a result, he has found that adding one or more modified starches selected from the group consisting of distarch phosphate, phosphated distarch phosphate, starch acetate, oxidized starch, hydroxypropyl starch, hydroxypropyl distarch phosphate, starch sodium octenyl succinate, monostarch phosphate, and their starch degradation products has improved the foaming property of the resulting nut milk. The present invention has been completed based on these findings.

That is, the present invention relates to:
(1) a nut milk for foaming comprising one or more modified starches selected from the group consisting of distarch phosphate, phosphated distarch phosphate, starch acetate, oxidized starch, hydroxypropyl starch, hydroxypropyl distarch phosphate, starch sodium octenyl succinate, monostarch phosphate, and their starch degradation products;
(2) the nut milk for foaming of (1), which is foamed with a steamer;
(3) a beverage, where the nut milk for foaming of (1) is foamed and placed on top of the beverage;
(4) a method for foaming a nut milk including foaming the nut milk for foaming of (1);
(5) a method for preparing a nut milk for foaming, including adding one or more modified starches selected from the group consisting of distarch phosphate, phosphated distarch phosphate, starch acetate, oxidized starch, hydroxypropyl starch, hydroxypropyl distarch phosphate, starch sodium octenyl succinate, monostarch phosphate, and their starch degradation products to a nut milk, and then emulsifying the nut milk.

### Effects of Invention

Nut milk produced by the present invention has better foaming property and foaming stability. For example, a product maintaining foam and having better mouthfeel and taste may be produced by foaming the nut milk with a steamer etc. and adding it to a coffee.

### Mode for Carrying Out Invention

The invention will be described in detail below.

### (Nut)

Examples of nut include hard fruit such as chestnut and hazelnut, kernel such as almond and walnut, and seed such as cashew and Brazil nut. These may be used alone or in combination.

The above nut may contain a hull, or may be used with removing the hull. Furthermore, the above nut may be processed into nut powder, nut paste, etc. Especially, nut paste is one of the preferred processing ingredients because of its easy availability as a raw material.

### (Nut milk)

As used herein, "nut milk" refers not only to nut milk obtained by completely removing an insoluble fraction from nut, but also to nut milk containing the insoluble fraction (especially, cell wall of cotyledon).

Typically, the nut milk is obtained by finely grinding a suspension (slurry) obtained by grinding nut without removing the insoluble fraction or with partially removing the insoluble fraction. Also, for example, nut milk obtained by separating part or all of the insoluble fraction once from the suspension, then finely grinding it and putting it back together again is within the scope of the nut milk of the present invention.

Nut milk containing the insoluble fraction (especially cell wall of cotyledon) also includes that containing nut powder or nut paste.

The nut milk of the present invention preferably has a protein content of 0.1 g/100 g or more, preferably 0.3 g/100 g or more.

### (Nut paste)

A nut paste of the present invention is made by grinding the above-mentioned nut as a raw material into a paste by using three rolls or other known grinding means, in which non-fat nut solids are dispersed or suspended in the oil obtained from each nut. The nut paste is not particularly limited, but preferably passes 20 mesh in the manufacturing process, is free of nut grain, and has a smooth mouthfeel.

The nut paste of the present invention is not limited by a degree of roasting or an origin of raw nut. Therefore, not only a paste prepared from natural (raw) nut with a low degree of roasting or unroasted, but also paste with a higher degree of roasting, colored by the nut itself, and with a strong smell unique to the nut may be used. In addition, these nut pastes with different degrees of roasting may be mixed as desired.

### (Nut milk for foaming)

As used herein, "nut milk for foaming" refers to nut milk used for foaming (whipping) with a steamer, a beater etc.

An example of a production method of nut milk with foaming property of the present invention is a method including: emulsifying a mixture of nut milk from nut as a raw material and one or more modified starch selected from the group consisting of distarch phosphate, phosphated distarch phosphate, starch acetate, oxidized starch, hydroxypropyl starch, hydroxypropyl distarch phosphate, starch sodium octenyl succinate, monostarch phosphate, and enzyme degradation product thereof; homogenizing the obtained emulsion with a homogenizer; and pasteurizing the homogenized product.

And optionally, fat may be added to the nut milk. In addition, food raw material such as fruit juice, fruit pulp, vegetable, sugar, fat, dairy product, grain flour, starch, cacao mass, poultry, livestock meat, and fish meat, and food additive such as emulsi er, mineral, vitamin, thickening stabilizer, acidulant, and flavor, may be used as appropriate as needed to enhance flavor preference and functionality. A method for emulsification is not limited, and for example, a homo-mixer or homogenizer may be used for emulsification. And optionally, a homogenizer may be used for homogenization. A homogenization pressure of the homogenizer is not particularly limited as long as the pressure is sufficient for emulsification.

### (Modified starch)

Examples of modified starch used in the present invention include distarch phosphate, phosphated distarch phosphate, starch acetate, oxidized starch, hydroxypropyl starch, hydroxypropyl distarch phosphate, starch sodium octenyl succinate, and monostarch phosphate. And, phosphorylated modified starch such as distarch phosphate, phosphated distarch phosphate, and hydroxypropyl distarch phosphate is preferable.

Starch raw material is not particularly limited, but include, for example, waxy corn, corn, high amylose corn, Irish potato, potato, wheat, rice, glutinous rice, tapioca, and various beans.

The above modified starch may also be subjected to physical treatment or enzyme hydrolysis treatment, such as gelatinization treatment, roast treatment, wet heat treatment, and hot water treatment.

An adding amount of the above modified starch is preferably such that the resulting nut milk has a viscosity suitable for beverage use. The viscosity is not particularly limited, but preferably 100 mPa·s, more preferably 50 mPa·s, and further preferably 30 mPa·s. A viscosity is measured with a BM type viscometer using No. 1 or No. 2 rotor at 60 rpm and 10°C for 1 minute for 200 g of sample poured into a measurement beaker.

The adding amount of modified starch is, for example, preferably 0.01 to 5.0% by weight, more preferably 0.1 to 3.0% by weight, and further preferably 0.1 to 1.0% by weight, relative to a weight of nut milk. When the adding amount of modified starch is too low, sufficient foaming stability may not be achieved. When the adding amount of modified starch is too high, foaming stability is not a problem, but viscosity increases and taste may be affected.

### (Fat)

Fat may be added to the nut milk used for foaming of the present invention. Any edible fats may be added. Examples of the fat include vegetable fat such as corn oil, soybean oil, sesame oil, rice bran oil, safflower oil, cottonseed oil, sunflower oil, rapeseed oil, coconut oil, palm oil, palm kernel oil, olive oil, peanut oil, almond oil, avocado oil, hazelnut oil, walnut oil, and perilla oil, and animal fat such as milk fat, beef tallow, lard, whale oil, fish oil, and chicken oil. It is preferable to use vegetable fat because a physical property of the fat may be easily controlled and all the ingredients may be prepared from vegetable ingredients. Also, the above fats may be used alone or in combination. In addition, processed fat thereof such as hydrogenated fat, fractionated fat, and interesterified fat may be used.

An addition of fat tends to increase kokumi taste of nut milk for forming and to give better mouthfeel. The adding amount of fat is preferably 0.01 to 5% by weight, more preferably 0.5 to 2% by weight relative to the weight of the nut milk.

### (Emulsifier)

An emulsifier may be added to the nut milk for foaming of the present invention. Emulsifier to be added is not particularly limited, and examples thereof include polyglycerol fatty acid ester, sucrose fatty acid ester, organic acid monoglyceride, monoglycerol fatty acid ester, sorbitan fatty acid ester, and lecithin.

### (Pasteurization)

Optionally, the nut milk for foaming of the present invention is pasteurized. Pasteurization method is not particularly limited, but includes, for example, direct heating method such as injecting high-temperature high-pressure water or high-pressure steam into a preparation liquid, Joule heating by electric current to a preparation liquid, and heating by high frequency (microwave), and indirect heating method such as electromagnetic induction heating, electric furnace, direct flame, fluidized sand bath, and molten salt bath. These methods may be carried out alone or in combination.

Although not always necessary, the nut milk may be homogenized again with a homogenizer after pasteurization.

### (Foaming)

The nut milk for foaming is foamed with, for example, a steamer, or a beater. Foaming with a steamer of espresso machine is more preferable. It may also be sealed with nitrous oxide or carbon dioxide gas in an espuma siphon and foamed by shaking or otherwise vibrating said espuma siphon and then squeezing it out of said espuma siphon into a container. Foamed nut milk may be used in a variety of beverages. Examples of the beverage include coffee, tea, and cocoa.

In example of coffee, a cappuccino-like beverage may be prepared by placing the nut milk for foaming of the present invention with a steamer of espresso machine for foaming and then adding it to coffee. This cappuccino-like beverage has better foaming property and foaming stability, smooth mouthfeel, and good flavor.

### (Evaluation method of foaming property of nut milk for foaming)

A foaming property of nut milk for foaming is determined by evaluating foaming property and foaming stability. Specifically, 100 ml of nut milk is foamed with a steamer of espresso machine (e.g., DeLonghi EC152J espresso machine) to 65°C, and foam height immediately after forming and after 10 minutes is observed. Nut milk showed 4.0 cm or more of foam height immediately after foaming and 50% or more of ratio of foam height after 10 minutes to foam height immediately after foaming is determined as having high foaming property and foaming stability, and better foaming property, and determined as o or better of overall evaluation, and considered as acceptable.

**(Table 1) Criteria of evaluating foaming property**

| | | | |
|---|---|---|---|
| Foam height immediately after foaming | 4.5 cm or more | 4.0 cm or more | Less than 4.0 cm |
| Ratio of foam height after 10 minutes to foam height immediately after foaming | 80% or more | 50% or more | Less than 50% |
| Overall evaluation | ⊙: Very good if all of the above are met | ○· Good if all or the above are met | ×: Bad if at least one or the above is met |

### Examples

The present invention will be described in more detail below, but the technical concept of the present invention is not limited to the following Examples. In the Examples, "%" and "part" are weight basis unless otherwise noted.

### (Example 1)

A mixture was prepared by mixing 46.6 parts of almond milk (manufactured by The Bridge S.R.L, protein content: 0.7%, fat content: 1.9%) as nut milk, 0.5 part of Pinebake CC (manufactured by Matsutani Chemical Industry Co., Ltd.), and 52.9 parts of water at 70°C. The mixture was homogenized at 5 MPa with a homogenizer to form an emulsion. After emulsification, the obtained emulsion was cooled to 10°C to obtain nut milk for foaming.

Then, 100 ml of the obtained nut milk for foaming was foamed with a steamer of espresso machine to 65°C. The foam height immediately after forming and after 10 minutes were observed.

### (Example 2)

A mixture was prepared by mixing 46.6 parts of almond milk (manufactured by The Bridge S.R.L, protein content: 0.7%, fat content: 1.9%) as nut milk, 0.8 part of coconut oil (manufactured by Fuji Oil Co., Ltd.), 0.5 part of Pinebake CC (manufactured by Matsutani Chemical Industry Co., Ltd.), and 52.1 parts of water at 70°C. The mixture was homogenized at 5 MPa with a homogenizer to form an emulsion. After emulsification, the obtained emulsion was cooled to 10°C to obtain nut milk for foaming.

Then, 100 ml of the obtained nut milk for foaming was foamed with a steamer of espresso machine to 65°C. The foam height immediately after forming and after 10 minutes were observed.

### (Comparative Example 1)

A mixture was prepared by mixing 46.6 parts of almond milk (manufactured by The Bridge S.R.L, protein content: 0.7%, fat content: 1.9%) as nut milk, and 53.4 parts of water at 70°C. The mixture was homogenized at 5 MPa with a homogenizer to form an emulsion. After emulsification, the obtained emulsion was cooled to 10°C to obtain nut milk for foaming.

Then, 100 ml of the obtained nut milk for foaming was foamed with a steamer of espresso machine to 65°C. The foam height immediately after forming and after 10 minutes were observed.

**(Table 2) Comparison of presence or absence of adding fat**

| | Modified starch | Presence or absence of adding fat | Foam height after 0 minute | Foam height after 10 minutes | Overall evaluation |
|---|---|---|---|---|---|
| Example 1 | Pinebake CC | Absence | 5.0 cm | 4.2 cm | ⊙ |
| Example 2 | Pinebake CC | Presence | 4.9 cm | 4.2 cm | ⊙ |
| Comparative Example 1 | | Absence | 3.5 cm | 3.2 cm | |

From the result of table 2, it was confirmed that Examples showed better evaluation of foaming property with or without adding fat.

In addition, Examples 1 and 2 showed better taste and mellower mouthfeel than Comparative Example 1. Especially, Example 2 showed more kokumi taste and mellower mouthfeel.

### (Examples 2 to 10 and Comparative Examples 2 to 4) Comparison of various modified starches

A mixture was prepared by mixing 46.6 parts of almond milk (manufactured by The Bridge S.R.L, protein content: 0.7%, fat content: 1.9%) as nut milk, 0.8 part of coconut oil (manufactured by Fuji Oil Co., Ltd.), 0.5 part of each modified starch, and 52.1 parts of water at 70°C. The mixture was homogenized at 5 MPa with a homogenizer to form an emulsion. After emulsification, the obtained emulsion was cooled to 10°C to obtain nut milk for foaming.

Then, 100 ml of the obtained each nut milk for foaming was foamed with a steamer of espresso machine to 65°C. The foam height immediately after forming and after 10 minutes were observed.

**(Table 3) Comparison of various modified starches**

| | Modified starch | Manufacturer | Component | Foam height after 0 minute | Foam height after 10 minutes | Overall evaluation |
|---|---|---|---|---|---|---|
| Example 2 | Pinebake CC | Matsutani Chemical Industry Co., Ltd. | Distarch Phosphate | 4.9 cm | 4.2 cm | ⊙ |
| Example 3 | Matsutani Satsuma | Matsutani Chemical Industry Co., Ltd. | phosphated Distarch Phosphate | 4.8 cm | 4.0 cm | ⊙ |
| Example 4 | Matsutani Sakura | Matsutani Chemical Industry Co., Ltd. | Starch Acetate | 4.8 cm | 4.2 cm | ⊙ |
| Example 5 | Stabirose T-10 | Matsutani Chemical Industry Co., Ltd. | Oxidized Starch | 4.2 cm | 3.5 cm | ○ |
| Example 6 | Food Starch SG | Matsutani Chemical Industry Co., Ltd. | Hydroxypropyl Starch | 4.0 cm | 3.7 cm | ○ |
| Example 7 | Matsutani Asagao | Matsutani Chemical Industry Co., Ltd. | Hydroxypropyl Distarch Phosphate | 4.8 cm | 4.2 cm | ⊙ |
| Example 8 | Pine Flow | Matsutani Chemical Industry Co., Ltd. | Decomposed starch | 4.7 cm | 3.5 cm | ○ |
| Example 9 | Emulstar TR | Matsutani Chemical Industry Co., Ltd. | Starch Sodium Octenyl Succinate | 4.8 cm | 3.7 cm | ○ |
| Example 10 | SMS707 | Matsutani Chemical Industry Co., Ltd. | Monostarch Phosphate | 4.5 cm | 4.0 cm | ⊙ |
| Comparative Example 2 | | | - | 3.5 cm | 3.3 cm | |
| Comparative Example 3 | AS | Tokai Dextrin Co., Ltd. | Acetylated Distarch Adipate | 3.2 cm | 2.9 cm | × |
| Comparative Example 4 | SMS747 | Matsutani Chemical Industry Co., Ltd. | Acetylated Distarch Phosphate | 3.6 cm | 3.1 cm | × |

From the result of table 3, it was confirmed that better evaluation of foaming property was obtained when distarch phosphate, phosphated distarch phosphate, starch acetate, oxidized starch, hydroxypropyl starch, hydroxypropyl distarch phosphate, starch sodium octenyl succinate, monostarch phosphate, or degradation product thereof was added.

In addition, Examples 2 to 10 showed better taste and mellower mouthfeel than Comparative Examples 2 to 4.

### (Example 11, Example 14, Comparative Example 5) Relationship with viscosity

A mixture was prepared by mixing 46.6 parts of almond milk (manufactured by The Bridge S.R.L, protein content: 0.7%, fat content: 1.9%) as nut milk, 0.8 part of coconut oil (manufactured by Fuji Oil Co., Ltd.), 40 parts of water, and Matsutani Asagao (manufactured by Matsutani Chemical Industry Co., Ltd.) in an amount for obtaining desired viscosity and water in an amount for adjusting total parts to 100 parts at 70°C. The mixture was homogenized at 5 MPa with a homogenizer to form an emulsion. After emulsification, the obtained emulsion was cooled to 10°C to obtain nut milk for foaming.

Then, 100 ml of the obtained each nut milk for foaming was foamed with a steamer of espresso machine to 65°C. The foam height immediately after forming and after 10 minutes were observed.

In addition, suitability for beverage was evaluated according to the following criteria from the average score of six trained professional panelists as evaluation score.
1: Suitable for beverage
2: Slightly heavy in mouthfeel, but suitable for beverage
3: Heavy in mouthfeel, not suitable for beverage

**(Table 4) Viscosity and su ability for beverage**

| | Adding amount (%) | Viscosity (mPa·s) | Suitability for beverage | Foam height after 0 minute | Foam height after 10 minutes | Overall evaluation |
|---|---|---|---|---|---|---|
| Example 7 | 0.5 | 6.0 | 1 | 4.8 cm | 4.2 cm | |
| Example 11 | 1.0 | 13.0 | 1 | 5.0 cm | 3.8 cm | ○ |
| Example 12 | 2.0 | 74.0 | 2 | 4.0 cm | 2.9 cm | ○ |
| Comparative Example 5 | 3.0 | 280.0 | 3 | 3.5 cm | 2.7 cm | × |

From the result of table 4, Examples 7, 11, and 12 were acceptable. It was confirmed that Comparative Example 5 showed unacceptable as overall evaluation, and that suitability for beverage were deteriorated.

## Claims

1. A nut milk for foaming comprising one or more modified starches selected from the group consisting of distarch phosphate, phosphated distarch phosphate, starch acetate, oxidized starch, hydroxypropyl starch, hydroxypropyl distarch phosphate, starch sodium octenyl succinate, monostarch phosphate, and their starch degradation products.

2. The nut milk for foaming according to claim 1, which is foamed with a steamer.

3. A beverage, wherein the nut milk for foaming according to claim 1 is foamed and placed on top of the beverage.

4. A method for foaming a nut milk comprising foaming the nut milk for foaming according to claim 1.

5. A method for preparing a nut milk for foaming, comprising adding one or more modified starches selected from the group consisting of distarch phosphate, phosphated distarch phosphate, starch acetate, oxidized starch, hydroxypropyl starch, hydroxypropyl distarch phosphate, starch sodium octenyl succinate, monostarch phosphate, and their starch degradation products to a nut milk, and then emulsifying the nut milk.
